# EUROPÄISCHE PATENTSCHRIFT

(11) **EP 3 410 979 B1**
(45) Veröffentlichungstag und Bekanntmachung des Hinweises auf die Patenterteilung: **11.11.2020**
(21) Anmeldenummer: 17712415.3
(22) Anmeldetag: 02.02.2017
(51) Int. Cl.: A61C 8/00

(54) **ABUTMENT, INSBESONDERE ZUR VERWENDUNG MIT EINEM IN DEN KIEFERKNOCHEN EINES PATIENTEN INSERIERTEN DENTALIMPLANTAT, UND VERFAHREN ZUR HERSTELLUNG DES ABUTMENTS**
ABUTMENT, IN PARTICULAR FOR USE WITH A DENTAL IMPLANT INSERTED INTO THE JAW BONE OF A PATIENT, AND METHOD FOR PRODUCING THE ABUTMENT
PILIER DESTINÉ À EN PARTICULIER À ÊTRE UTILISÉ AVC UN IMPLANT DENTAIRE INSÉRÉ DANS L'OS MAXILLAIRE D'UN PATIENT, ET PROCÉDÉ DE FABRICATION DUDIT PILIER

(30) Priorität: 04.02.2016 DE 102016102009
(43) Veröffentlichungstag der Anmeldung: 12.12.2018
(73) Patentinhaber: Zipprich, Holger, 64342 Malchen (DE)
(72) Erfinder: Zipprich, Holger, 64342 Malchen (DE)
(74) Vertreter: Tergau & Walkenhorst Patentanwälte PartGmbB
(86) Internationale Anmeldenummer: PCT/EP2017/052301
(87) Internationale Veröffentlichungsnummer: WO 2017/134185

(56) Entgegenhaltungen:
- WO-A1-97/14371
- WO-A1-97/14371
- CN-A- 103 550 002
- CN-A- 103 550 002
- US-B1- 6 663 388
- US-B1- 6 663 388

## Beschreibung

Die Erfindung betrifft ein Abutment, insbesondere zur Verwendung mit einem in den Kieferknochen eines Patienten inserierten Dentalimplantat, mit einem in einen zugeordneten Aufnahmekanal des Dentalimplantats einbringbaren Verbindungszapfen, in den ein Schraubenkanal für eine zur Verbindung des Abutments mit dem Dentalimplantat vorgesehene Verbindungsschraube integriert ist. Sie bezieht sich weiter auf ein Verfahren zur Herstellung eines derartigen Abutments.

Zum Ausgleich des Verlusts eines Zahnes können im Rahmen der rekonstruktiven Therapie Dentalimplantatsysteme zum Einsatz kommen. Sie werden üblicherweise anstelle eines extrahierten oder ausgefallenen Zahnes in den Kieferknochen eingesetzt, um dort nach einer Einheilphase von etwas vier bis zwölf Wochen ein als Zahnersatz dienendes prothetisches Teil oder eine Krone zu halten. Dazu ist ein derartiges Dentalimplantat üblicherweise als geeignet geformter Metallkörper ausgebildet, der durch Einschrauben an der vorgesehenen Stelle in den Kieferknochen eingesetzt wird. Das Dentalimplantat weist dabei in der Regel am apikalen Ende ein zumeist selbstschneidendes Schraubengewinde auf, mit welchem das Dentalimplantat in das entsprechend präparierte Implantatbett eingesetzt wird.

Im Gegensatz zu einteiligen Dentalimplantaten, bei denen die als Zahnersatz dienende Prothetik unmittelbar an dem in den Kieferknochen eingeschraubten Metallkörper angebracht wird, sind auch zwei- oder mehrteilige Implantatsysteme bekannt und weit verbreitet. In einem solchen mehrteiligen Dentalimplantatsystem ist zusätzlich zu dem eigentlichen, in den Kieferknochen des Patienten einzuschraubenden Dentalimplantat in der Art eines Verbindungs- oder Übergangsstücks ein so genanntes Aufbauteil oder Abutment vorgesehen, das die als Zahnersatz vorgesehene Prothetik oder Krone trägt. Nach erfolgter Einheilung des eigentlichen Dentalimplantats in den Kieferknochen des Patienten wird in der Art einer Fertigstellung des Implantatsystems das mit der Prothetik versehene Abutment auf das Dentalimplantat aufgesetzt und mit diesem verbunden.

Die Herstellung einer solchen Verbindung des zur Anbringung der Prothetik vorgesehenen Abutments mit dem inserierten Dentalimplantat erfolgt üblicherweise mittels einer Schraubverbindung. Zur Sicherstellung einer im Hinblick auf die zu erwartenden Kaubelastungen ausreichend hohen mechanischen Stabilität des Gesamtsystems ist dabei das Abutment üblicherweise mit einem Verbindungszapfen versehen, der in der Art einer Steckverbindung in einen zugeordneten Aufnahmekanal im Dentalimplantat einbringbar ist und in montiertem Zustand eine laterale und ggf. auch axiale Führung und fixierte Positionierung der Komponenten zueinander sicherstellt. In diesen Verbindungszapfen ist üblicherweise ein Schraubenkanal für eine zur Verbindung des Abutments mit dem Dentalimplantat vorgesehene Verbindungsschraube integriert. Die Verbindungsschraube durchdringt dabei den Schraubenkanal und greift mit ihrem Außengewinde in ein korrespondierendes Innengewinde im Dentalimplantat ein. Der Schraubenkopf der Verbindungsschraube liegt dabei auf einer außerhalb des Schraubenkanals angeordneten Stirnsenkung im Abutment auf und presst über diese das Aufbauteil beim Einschrauben der Verbindungsschraube auf das Pfostenteil.

Die Anbringung der eigentlichen Prothetik oder des Zahnersatzes erfolgt üblicherweise an einem hierfür vorgesehenen, am Grundkörper des Abutments angeformten Montagezapfens. Je nach Bauweise des Implantatsystems kann die Prothetik an diesen angeklebt oder auf sonstige Weise stoffschlüsssig befestigt werden; alternativ sind aber auch Schraubsysteme im Einsatz, bei denen die Befestigung der Prothetik mit einer Verbindungsschraube erfolgt. Diese greift dann in ein im Montagezapfen angeordnetes Gewinde ein. Der Platzbedarf für die Unterbringung dieses Gewindes bedingt jedoch eine Reduzierung der Materialstärke in diesem Bereich, was zu einer unerwünschten Schwächung und Beeinträchtigung der mechanischen Festigkeit des Systems führen könnte.

Ein Abutment mit einem Haltelement im Schraubenkanal zur Abstützung einer Verbindungsschraube ist aus WO 97/14371 A1 bekannt.

Der Erfindung liegt die Aufgabe zugrunde, ein Abutment, insbesondere zur Verwendung mit einem in den Kieferknochen eines Patienten inserierten Dentalimplantat, der oben genannten Art anzugeben, das eine besonders hohe mechanische Belastbarkeit und damit auch eine insgesamt hohe Lebensdauer aufweist. Des Weiteren soll ein geeignetes Verfahren zur Herstellung eines derartigen Abutments angegeben werden.

Bezüglich des Abutments wird diese Aufgabe erfindungsgemäß durch ein Abutment nach Anspruch 1 gelöst, indem der Innendurchmesser des Schraubenkanals über dessen gesamte Länge bis hin zur endseitigen Öffnung mindestens so groß gewählt ist wie der Durchmesser des Schraubenkopfes der Verbindungsschraube, wobei zur Abstützung der Verbindungsschraube ein nachträglich zur Verbindungsschraube in den Schraubenkanal eingebrachtes, plastisch verformtes Halteelement vorgesehen ist.

Die Erfindung geht dabei von der Überlegung aus, dass auch im Hinblick auf die im Rahmen der zu erwartenden Kaubelastung auftretenden vergleichsweise hohen Belastungskräfte eine hohe Bruchfestigkeit und damit lange Lebensdauer des Abutments erreichbar ist, indem dessen struktureller Aufbau konsequent auf die Vermeidung mechanischer Schwachstellen hin ausgelegt ist. Wie sich in überraschender Weise herausgestellt hat, könnte eine solche Schwachstelle gerade bei mit Innengewinde im Montagezapfen ausgeführten Abutments auf zu geringe Materialstärken zurückzuführen sein, die sich geometriebedingt bei einer solchen Ausführung ergeben könnten. Bei Abutments herkömmlicher Bauart, bei denen die Verbindungsschraube von "oberhalb", also vom der Prothetik zugewandten Ende, in den Schraubenkanal eingesetzt wird, ist das Abutment mit einer entsprechenden Senkung oder Sackbohrung versehen, deren freier Durchmesser an den Durchmesser des Schraubenkopfes der Verbindungsschraube angepasst ist. Das für die Bereitstellung der gewünschten Festigkeit verfügbare Material ist dabei durch das diese Sackbohrung umgebende Material gegeben.

Eine unerwünschte Beeinträchtigung der hiermit erreichbaren Materialfestigkeit könnte sich dabei durch die genannte Bauweise ergeben, bei der der für die Anbringung der Prothetik vorgesehene Montagezapfen mit dem Innengewinde und demzufolge mit einer entsprechenden Bohrung versehen ist. Damit können sich geometriebedingt gerade im Bereich des Zusammentreffens dieser intregierten Kanäle Raumbereiche mit vergleichsweise geringer Materialstärke im Abutment ergeben, die die Bruchfestigkeit unerwünscht verringern könnten.

Um dem entgegenzuwirken, ist nunmehr vorgesehen, die Materialstärken unabhängig von der Bauweise in den genannten Raumbereichen vergleichsweise hoch zu halten. Um dies zu ermöglichen, ist das Abutment dafür ausgelegt, die Verbindungsschraube und insbesondere den vergleichsweise breiten Schraubenkopf nicht wie bisher "von oben", also von der der Prothetik zugewandten Seite des Abutments, sondern nunmehr "von unten", also von der dem Dentalimplantat zugewandten Seite, in den Abutmentkörper einzubringen. Dies ist durch eine "Passierbarkeit" erreichbar, bei der der Schraubenkopf aufgrund geeigneter Geometriewahl in den Schraubenkanal ein- und in diesem entlang geführt werden kann. Dies ist im Sinne einer Liearbewegung durch ausreichend groß bemessene lichte Weite des Querschnitts des Schraubenkanals oder alternativ und gleichwirkend durch ineinander greifende Gewinde außen am Schraubenkopf und innen im Schraubenkanal erreichbar, bei denen eine Rotation des Schraubenkopfs in eine entsprechenden Vorschub im Schraubenkanal umgesetzt wird. Im oberen Montagebereich des Abutments ist dabei lediglich noch ein vergleichsweise eng dimensionierter Zugangskanal vorgesehen, durch den ein geeignetes Werkzeug wie beispielsweise ein Schraubendreher zugeführt und mit dem Schraubenkopf der Verbindungsschraube in Eingriff gebracht werden kann. Diese vergleichsweise engere Dimensionierung des Kanals im Montagebereich des Abutment erlaubt höhere Material- und Wandstärken, so dass die gewünschte hohe Festigkeit des Abutments gegeben ist.

Um auch bei dieser Anordnung eine zuverlässige Befestigung des Abutments am Dentalimplantat mittels der Verbindungsschraube zu ermöglichen, ist der Schraubenkopf der Verbindungsschraube in vorteilhafter Ausgestaltung an einem nachträglich zur Verbindungsschraube in den Schraubenkanal eingebrachten Halteelement abgestützt.

Das Halteelement ist dabei vorteilhafterweise seinerseits ebenfalls geeignet am Schraubenkanal und somit am Grundkörper des Abutments abgestützt. In einer vorteilhaften Ausgestaltung ist dabei als Halteelement ein in den Schraubenkanal eingepresster Stützring vorgesehen. Dieser kann nach der Einbringung der Verbindungsschraube in den Schraubenkanal eingelegt und anschließend derart plastisch verformt werden, dass er einerseits eine zuverlässige mechanische Bindung mit dem umgebenden Schraubenkanal eingeht und andererseits eine zuverlässige Auflagefläche für den Schraubenkopf bietet, auf dem dieser abgestützt werden kann.

In alternativer oder zusätzlicher vorteilhafter Ausgestaltung kann das Halteelement in den Schraubenkanal eingeschraubt sein, vorzugsweise in der Art eines Bajonettverschlusses. In alternativer oder zusätzlicher vorteilhafter Ausgestaltung ist als Halteelement ein mit einer umlaufenden, in eine zugeordnete, im Schraubenkanal umlaufende Nut eingreifenden Wulst versehener Stützring vorgesehen. Dieser kann insbesondere als Schnappring ausgeführt sein.

Form und Geometrie des Abutments sind üblicherweise in Anbetracht der therapeutischen Erfordernisse geeignet gewählt. Insbesondere kann ein Abutment der genannten Art in einer "geradlinigen" Ausführung ausgestaltet sein, bei der der zur Anbringung der eigentlichen Prothetik üblicherweise vorgesehene Montagezapfen mit seiner Längsrichtung oder Längsachse im Wesentlichen parallel zur Längsrichtung oder Längsachse des Verbindungszapfens ausgerichtet ist. Alternativ kann das Abutment im Hinblick auf die therapeutischen Erfordernisse aber auch abgewinkelt ausgeführt sein. In einer derartigen abgewinkelten Ausführung ist die Längsachse oder Längsrichtung des Montagezapfens um einen Neigungswinkel von beispielsweise 15° - 45° gegenüber der Längsachse oder Längsrichtung des Verbindungszapfens geneigt. Derartige Systeme können insbesondere dann zum Einsatz kommen, wenn beispielsweise für eine mechanisch stabile Verankerung des Implantats im Kieferknochen ein "schräges" Einschrauben des Dentalimplantats in den Knochen erforderlich ist, bei der die Längsrichtung des Implantats schräg zur Restbezahnung des Patienten ausgerichtet werden muss.

In besonders bevorzugter Ausgestaltung der vorliegenden Erfindung ist das Abutment als abgewinkeltes Abutment ausgeführt und umfasst einen zur Anbringung eines Prothetikelements vorgesehenen Montagezapfen, dessen Längsachse um einen Verkippungswinkel von 15° - 30° gegenüber der Längsachse des Schraubenkanals verkippt angeordnet ist. Gerade bei einer derartigen abgewinkelten Ausführung könnte es nämlich bei einem mit Innengewinde versehenen Montagezapfen besonders wahrscheinlich zu Überlappungen oder Überschneidungen der materialfreien Raumbereiche, also der Schraubenkanäle oder-gewinde, miteinander und damit zu unerwünschten materialseitigen Schwächungen kommen, so dass die mit der Verlagerung der Schraubenaufnahme verbundenen Vorteile besonders zum Tragen kommen. Dieser Effekt ist umso gravierender, je kleiner der Verkippungswinkel ist, so dass die numehr vorgesehene erfindungsgemäße Ausgestaltung gerade bei kleinen Verkippungswinkeln von etwa 15° besonders vorteilhaft ist.

Bezüglich des Verfahrens zur Herstellung eines Abutments wird die oben genannte Aufgabe gelöst, indem in den Schraubenkanal eines Abutment-Grundkörpers von dessen für den Kontakt mit dem Dentalimplantat vorgesehener Stirnseite aus die Verbindungsschraube mit ihrem Schraubenkopf voraus eingelegt wird, wobei anschließend in den Schraubenkanal ein zur Abstützung des Schraubenkopfes vorgesehenes Halteelement eingebracht und im Schraubenkanal fixiert wird.

Die mit der Erfindung erzielten Vorteile bestehen insbesondere darin, dass durch die modifizierte Ausgestaltung des Schraubenkanals für die Verbindungsschraube diejenigen Bereiche des Schraubenkanals mit vergleichsweise großem freien Querschnitt in den dem Dentalimplantat zugewandten, zur Verbindung mit dem Dentalimplantat vorgesehenen Teil des Abutment-Grundkörpers verlagert werden. In diesem Teil des Abutment-Grundkörpers liegen üblicherweise vergleichsweise hohe Materialstärken und dementsprechend Festigkeitswerte vor, so dass die Bohrung für den Schraubenkanal mit nunmehr vergrößertem freien Querschnitt keine nennenswerte Schwächung des Materials mit damit einhergehender Beeinträchtigung der Festigkeit verursacht. Im anderen, der Prothetik zugewandten Teil des Abutment-Grundkörpers, der geometriebedingt gerade bei abgewinkelter Ausführung des Abutments und entsprechender Führung der Innenkanäle lokalisierte Bereiche geringer Materialstärke aufweisen könnte, ist dabei für die Verbindungsschraube lediglich ein Zugangskanal für das Antriebswerkzeug wie beispielsweise einen Schraubendreher erforderlich, der mit deutlich reduziertem Innendurchmesser ausgeführt sein kann.

Ein Ausführungsbeispiel der Erfindung wird anhand einer Zeichnung näher erläutert. Darin zeigen:
- Fig. 1: ein für die Verwendung mit einem Dentalimplantat vorgesehenes Abutment nach dem Stand der Technik einschließlich der zugeordneten Verbindungsschraube in montiertem Zustand im Längsschitt,
- Fig. 2: das Abutment nach Fig. 1 einschließlich der zugeordneten Verbindungsschraube in seitlicher Ansicht,
- Fig. 3: das Abutment nach Fig. 1 in seitlicher Draufsicht,
- Fig. 4: das Abutment nach Fig. 1 in seitlicher Ansicht,
- Fig. 5: das Abutment nach Fig. 1 in seitlicher Ansicht in Explosionsdarstellung,
- Fig. 6: das Abutment nach Fig. 1 in Explosionsdarstellung im Längsschnitt,
- Fig. 7: ein für die Verwendung mit einem Dentalimplantat vorgesehenes Abutment erfindungsgemäßes einschließlich der zugeordneten Verbindungsschraube in montiertem Zustand im Längsschitt,
- Fig. 8: das Abutment nach Fig. 7 einschließlich der zugeordneten Verbindungsschraube in seitlicher Ansicht,
- Fig. 9: das Abutment nach Fig. 7 in seitlicher Ansicht in Explosionsdarstellung,
- Fig. 10: das Abutment nach Fig. 7 in Explosionsdarstellung im Längsschnitt,
- Fig. 11: das Abutment nach Fig. 7 in seitlicher Draufsicht,
- Fig. 12: einen vergrößerten Ausschnitt aus Fig. 10,
- Fig. 13: Schritte des Montageverfahrens für das Abument nach Fig. 7,
- Fig. 14: eine alternative Ausführung eines erfindungsgemäßen Abutments im Längsschnitt in einigen Schritten bei seiner Herstellung,
- Fig. 15: eine weitere Ausführung eines erfindungsgemäßen Abutments im Längsschnitt oder als Explosionszeichnung in einigen Schritten bei seiner Herstellung, und
- Fig. 16: verschiedene Ausführungen eines Stützrings im Längsschnitt.

Gleiche Teile sind in allen Figuren mit denselben Bezugszeichen versehen.

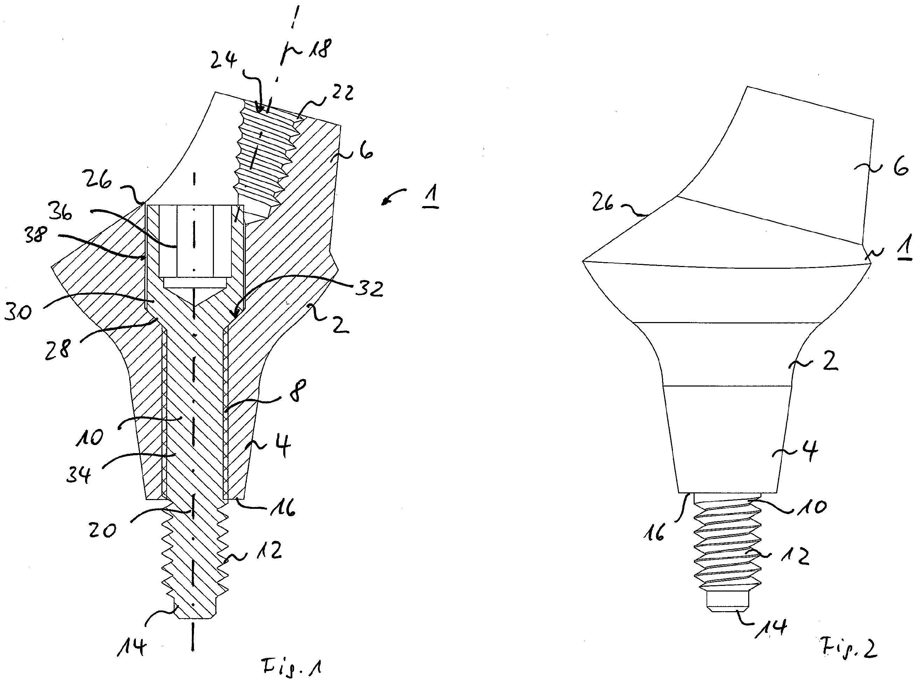

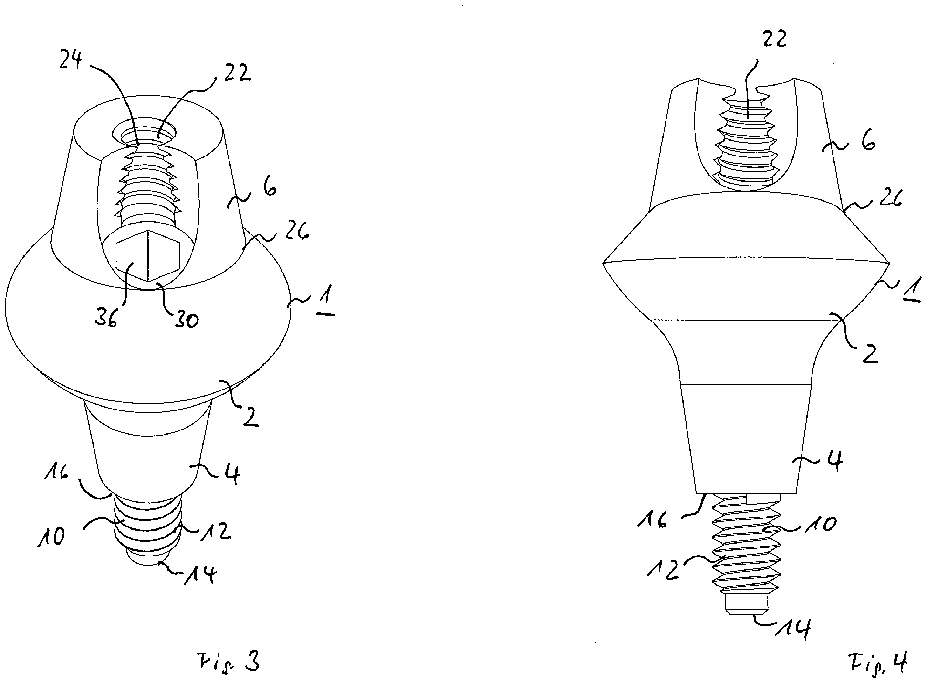

Das Abutment 1 nach den Figuren 1 - 6 ist zur Verwendung als Verbindungsstück mit einem nicht näher dargestellten, in den Kieferknochen eines Patienten inserierten Dentalimplantat und zur Anbringung einer dentalen Prothetik oder eines Zahnersatzstücks vorgesehen. Das Abutment 1 umfasst einen aus im Hinblick auf die erwünschte Biokompatibilität geeignet gewählten Material, vorzugsweise aus einem Material auf Titanbasis oder einem Kermaikmaterial, gefertigten Grundkörper 2, an dem ein in einen zugeordneten Aufnahmekanal des Dentalimplantats einbringbarer und in seinen Abmessungen und eine ggf. vorhandene Indizierung angepasster Verbindungszapfen 4 angeformt ist. Der Verbindungszapfen 4 kann dabei im Querschnitt rund, zur Erzeugung einer Indizierung nicht rund, beispielsweise sechskantförmig, oder auch in der Art einer Mischform segmentweise aus runden und nichtrunden Zonen kombiniert ausgeführt sein. Des Weiteren umfasst das Abutment 1 einen ebenfalls an den Grundkörper 2 angeformten Montagezapfen 6, an den die dentale Prothetik bzw. das Zahnersatzstück angebracht werden kann. Auch der Montagezapfen 6 kann im Querschnitt rund, zur Erzeugung einer Indizierung nicht rund, beispielsweise sechskantförmig, oder auch in der Art einer Mischform segmentweise aus runden und nichtrunden Zonen kombiniert ausgeführt sein.

Das Abutment 1 ist zur Befestigung am zugeordneten Dentalimplantat mittels einer Schraubverbindung ausgelegt. Dazu ist in den Verbindungszapfen 6 ein Schraubenkanal 8 integriert, in dem eine zur Verbindung des Abutments 1 mit dem zugeordneten Dentalimplantat vorgesehene Verbindungsschraube 10 geführt ist. Die Verbindungsschraube 10 durchdringt dabei den Schraubenkanal 8, wobei im in Fig. 1 gezeigten eingebrachten Zustand das mit einem Außengewinde 12 versehene freie Ende 14 der Verbindungsschraube 10 aus dem apikalen, bei der Montage zur Verbindung mit dem Dentalimplantat vorgesehenen Ende 16 des Abutments 1 herausragt. Bei der Montage auf dem zugeordneten Dentalimplantat greift die Verbindungsschraube 10 mit ihrem Außengewinde 12 in ein korrespondierendes Innengewinde im Dentalimplantat ein.

In der in den Figuren 1 bis 6 dargestellten Ausführungsform ist das Abutment 1 als abgewinkeltes Abutment ausgeführt. Dabei ist die seine Längsrichtung definierende Zentral- oder Längsachse 18 des Montagezapfens 6 um einen im Hinblick auf die vorgesehene therapeutische Situation geeignet gewählten Neigungswinkel von beispielsweise 15° gegenüber der die Längsrichtung des Verbindungszapfens 4 definierende Zentral- oder Längsachse 20 geneigt. Das Abutment 1 ist dabei für die Anbringung der Prothetik oder des Zahnersatzes am Montagezapfen 6 mittels einer Schraubverbindung ausgeführt. Hierzu ist in den Montagezapfen 6 eine mit einem Innengewinde 22 versehene Bohrung 24 eingebracht.

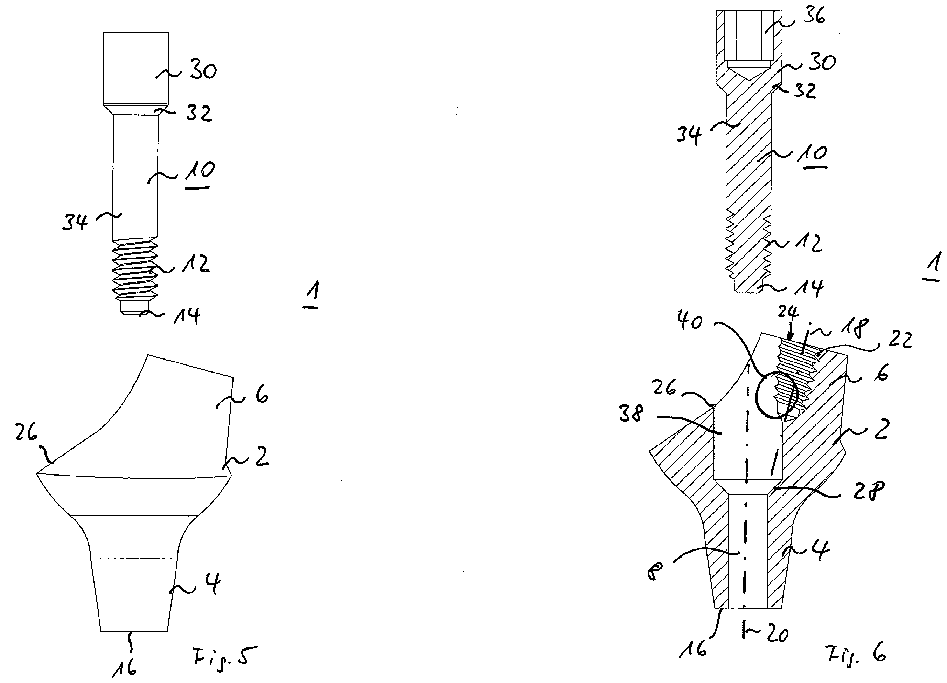

Das in den Figuren 1 bis 6 dargestellte Abutment 1 ist hinsichtlich der Lagerung und Führung der Verbindungsschraube 10 im Grundkörper 2 nach einer im Stand der Technik üblichen Variante ausgeführt. Dabei ist die Verbindungsschraube 10 vom "oberen", okklusalen Ende 26 des Abutments 1 her in den Schraubenkanal 8 eingebracht. Dazu ist in diesem, dem Schraubenkanal 8 unmittelbar benachbarten Bereich des Grundkörpers 2 eine Schraubenauflage 28 angebracht, auf der im montierten Zustand der Schraubenkopf 30 der Verbindungsschraube 10 aufliegt und über diese das Abutment 1 beim Einschrauben der Verbindungsschraube 10 auf das Dentalimplantat presst. Daran angepasst weist die Verbindungschraube 10, wie dies besonders in der Explosionsdarstellung gemäß FIG. 5 deutlich wird, einen vorzugsweise abgeschrägten Übergangsbereich 32 zwischen dem Schraubenkopf 30 und dem Schraubenschaft 34 auf. Dieser Übergangsbereich 32 bildet den Schraubenkopfsitz, mit dem die Verbindungsschraube 10 in montiertem Zustand auf der Schraubenauflage 28 aufsitzt. Dementsprechend sind Schraubenauflage 28 und Übergangsbereich 32 oder Schraubenkopfsitz hinsichtlich ihrer Geoemetrie und Dimensionierung aneinander angepasst ausgeführt.

Der Schraubenkopf 30 ist mit einer rotationssperrenden Ausnehmung 36, im Ausführungsbeispiel einem Innensechskant, ausgeführt, mit der ein entsprechendes Werkzeug, beispielsweise ein Schraubendreher, in Eingriff gebracht werden kann, um die Verbindungsschraube 10 festzuziehen. Der der Schraubenauflage 28 zugeordnete Zugangskanal 38, in dem der Schraubenkopf 30 geführt ist, weist einen ausreichend groß bemessenen freien Innenquerschnitt auf, so dass der Schraubenkopf 30 im Zugangskanal 38 in Längsrichtung bewegt werden kann. Der freie Innenquerschnitt des Zugangskanals 38 ist somit größer als der Durchmesser des Schraubenkopfs 30. Damit wird über den Zugangskanal 38 auch der Eingriff des Werkzeugs in die Ausnehmung 36 ermöglicht.

Wie der beispielhaften Darstellung insbesondere in FIG. 6 entnehmbar ist, kann dies in einem Überlappungsbereich 40 zu Überlappungen oder Überschneidungen mit der Bohrung 24 oder deren Innengewinde 22 im Montagezapfen 6 führen, so dass lokal nur noch geringe Materialstärken zur Verfügung stehen oder Teile des jeweiligen Gewindes gänzlich beeinträchtigt sind. Beides kann eine Schwächung des lokalen Gefüges und eine Verringerung der mechanischen Festigkeit und Belastbarkeit insbesondere der Schraubverbindung zur Folge haben.

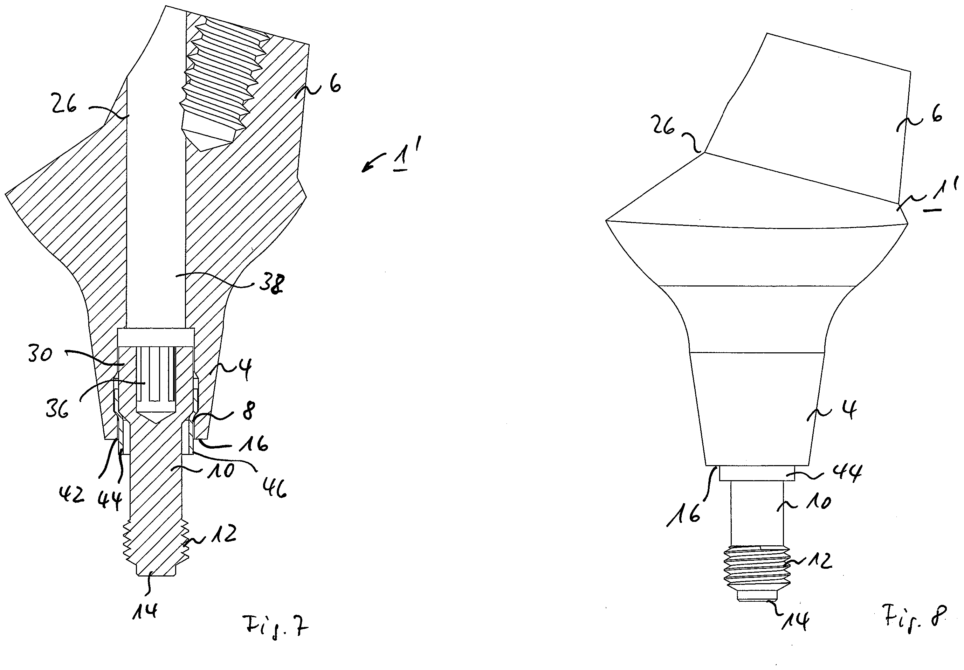

Um dem entgegenzuwirken, weist das die in den Figuren 7 bis 12 dargestellte Ausführungsbeispiel eines erfindungsgemäßen Abutments 1' eine gegenüber dem bekannten Abutment 1 grundsätzlich andere Führung der Verbindungsschraube 10 auf. In den nachfolgenden Erläuterungen ist das Abutment 1' als abgewinkeltes Abutment ausgeführt; alternativ kann aber selbstverständlich auch eine geradlinige Ausführung vorgesehen sein, bei der die Längsachse 18 des Montagezapfens 6 parallel zur Längsachse 20 des Verbindungszapfens 4 ausgerichtet ist.

Bei der erfindungsgemäßen Ausführung des Abutments 1' ist der zur Aufnahme und Führung der Verbindungsschraube 10 vorgesehene Schraubenkanal 8 derart ausgelegt und dimensioniert, dass die Verbindungsschraube 10 - mit ihrem Schraubenkopf 30 voraus - von "unten", d. h. vom apikalen Ende 16 aus, in den Schraubenkanal 8 eingebracht werden kann. Um dies zu ermöglichen, ist in der erfindungsgemäßen Ausführungsform der freie Innendurchmesser des Schraubenkanals 8 über dessen gesamte Länge bis hin zur seiner endseitigen Öffnung 42 mindestens so groß gewählt wie der Durchmesser des Schraubenkopfes 30 der Verbindungsschraube 10. Damit ist erreicht, dass der Schraubenkopf 30 nunmehr im eigentlichen Schraubenkanal 8 in Längsrichtung bewegt werden kann.

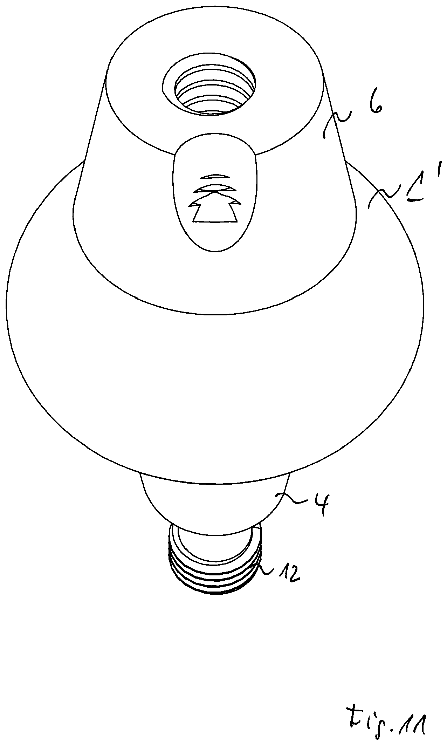

Demzufolge ist der Zugang vom "oberen", okklusalen Ende 26 des Abutments 1' zum Schraubenkopf 30 in dieser Ausführungsform nur noch notwendig, um ein geeignetes Werkzeug wie beispielsweise einen Schraubendreher mit dem Schraubenkopf 30 in Eingriff zu bringen, beispielsweise um die Verbindungsschraube 10 anzuziehen. Dies kann über den Zugangskanal 38 erfolgen. Dieser kann aber im Vergleich zu den bekannten Systemen nunmehr mit deutlich verringertem freiem Innenquerschnitt ausgeführt sein, da nunmehr nicht mehr der Schraubenkopf 30 in seiner vollen Breite durch diesen Kanal geführt werden muss. Damit kann im benachbarten Bereich des Grundkörpers 2 mit deutlich erhöhten Materialstärken gearbeitet werden, so dass die Auswirkungen eventueller Überlappungen mit den benachbarten Bohrungen 24 etc. deutlich vermindert sind. Diese Auswirkungen sind in der seitlich perspektivischen Ansicht in FIG.11 deutlich erkennbar. Bei der alternativ möglichen Ausgestaltung des erfindunsggemäßen Abutments 1' mit geradlinig verlaufendem Montagezapfen 6 ist hingegen ein wesentlicher Vorteil, dass dann ein ggf. im Montagezapfen 6 vorhandenes Innengewinde 22 von seinem Gewindekern her nicht mehr, wie in bisherigen Systemen notwendig, größer ausgeführt werden muss als der Schraubenkopf 30, was gegebenenfalls in der lokalen Umgebung im Grundkörper 2 zu sehr geringen Materialstärken führen könnte. Vielmehr kann nunmehr im erfindungsgemäßen Abutment 1' der Gewindekern eines solchen Innengewindes 22 im Montagezapfen 6 vergleichsweise klein dimensioniert werden, so dass noch vergleichsweise große Wandstärken in den umliegenden Bereichen verbleiben.

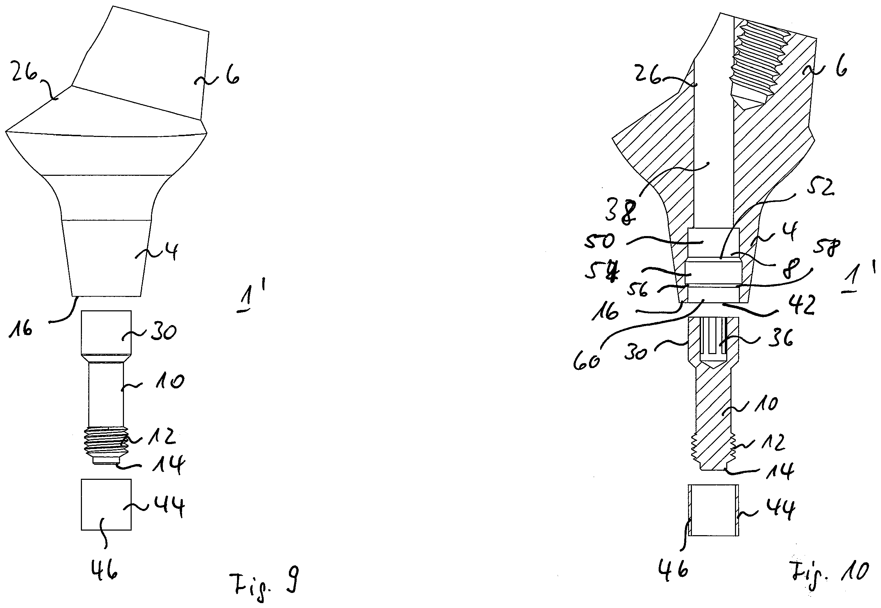

Um die Montage des Abutments 1' auf dem Dentalimplantat mittels der Verbindungsschraube 10 auch in dieser Variante zu ermöglichen, ist der Schraubenkopf 30 der Verbindungsschraube 10 in apikaler Richtung hin, also zur endseitigen Öffnung 42 des Schraubenkanals 8 hin, an einem nachträglich zur Verbindungsschraube 10 in den Schraubenkanal 8 eingebrachten Halteelement 44 abgestützt. Als Halteelement 44 ist dabei im Ausführungsbeispiel ein in den Schraubenkanal 8 eingepresster Stützring 46 vorgesehen. Um diesen geeignet einbringen und als Abstützung verwenden zu können, ist zudem der Schraubenkanal 8 in dieser Ausführungsform in mehreren Segmenten ausgeführt, wie dies insbesondere aus der Schnittdarstellung in FIG. 10 deutlich wird.

Zur Aufnahme des Schraubenkopfes 30 umfasst der Schraubenkanal 8 ein erstes Segment 50, das endseitig unmittelbar in den Zugangskanal 38 übergeht und in seinem freien Durchmesser geringfügig größer gewählt ist als der Außendurchmesser des Schraubenkopfes 30, so dass dieser problemlos innerhalb des ersten Segments 50 um seine Längsachse gedreht werden kann. An dieses erste Segment 50 schließt sich - im Ausführungsbeispiel über einen Übergangsbereich 52 - ein zweites Segment 54 des Schraubenkanals 8 an. In diesem zweiten Segment 54 weist der Schraubenkanal 8 einen im Vergleich zum ersten Segment 50 vergrößerten oder aufgeweiteten Querschnitt auf. Diese im Ausführungsbeispiel vorgesehene Unterteilung in das erste Segment 50 und das zweite Segment 54 ist für die vorliegende Erfindung nicht unbedingt notwendig, hat aber den Vorteil, dass durch den im Vergleich zum zweiten Segment 54 reduzierten Durchmesser des ersten Segments 50 in dessen Umgebung vergleichsweise große Wandstärken im Grundkörper 2 und damit entsprechend erhöhte Festigkeitswerte erreichbar sind.

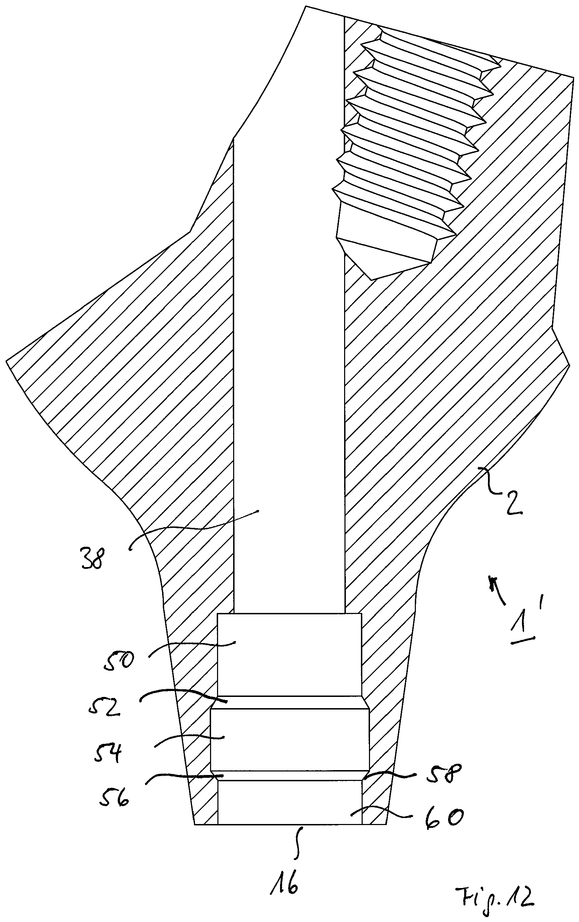

Das zweite Segment 54 wiederum geht, in Richtung auf das apikale Ende 16 hin gesehen, in einem Übergangsbereich 56 unter Bildung einer - im Ausführungsbeispiel abgeschrägten - Stützkante 58 in ein drittes Segment 60 über. Das dritte Segment 60 weist einen im Vergleich zum zweiten Segment 54 reduzierten oder verringerten Innenquerschnitt oder Innendurchmesser auf; vom zweiten Segment 54 zum dritten Segment 60 verjüngt sich somit der Innenquerschnitt des Schraubenkanals 8. Zur besseren Erkennbarkeit sind diese Teile in FIG. 12 erneut vergrößert dargestellt.

Als bedeutendes Element der vorliegenden Erfindung ist vorgesehen, zur Abstützung des Schraubenkopfes 30 eine plastische Verformung des nachträglich in den Schraubenkanal 8 eingebrachten Stützrings 46 vorzunehmen. Dementsprechend ist der Stützring 46 vorzugsweise aus einem für eine derartige plastische Verformung geeignet gewählten Material, vorzugsweise einem metallischen Werkstoff, insbesonder einem Material auf Titanbasis, gefertigt. Für die vorgesehene plastische Verformung wird im Ausführungsbeispiel die beim Übergang vom Schraubenkopf 30 in den Schraubenschaft 34 durch den Übergangsbereich 32 gebildete Verformungskante an der Verbindungsschraube 10 genutzt.

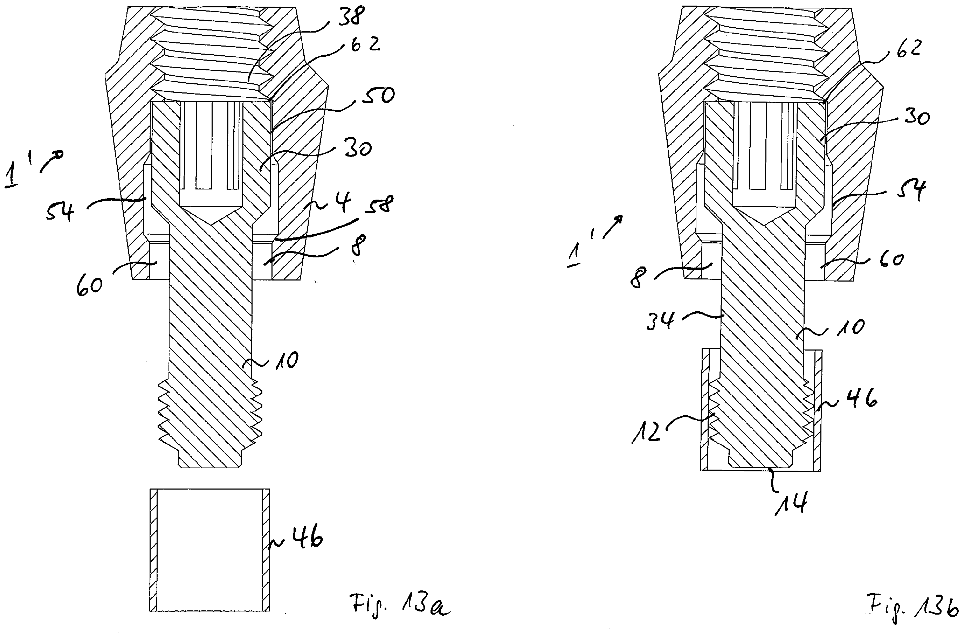

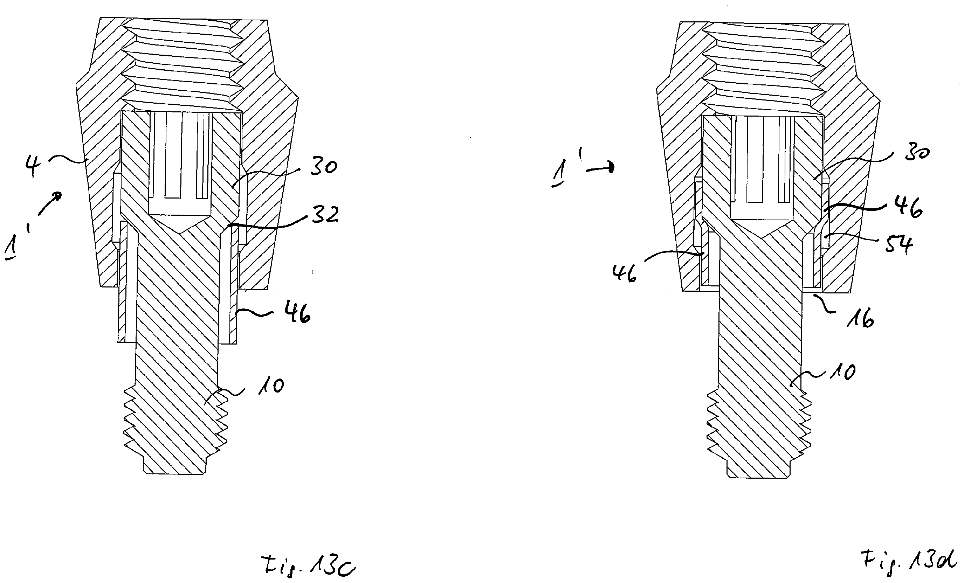

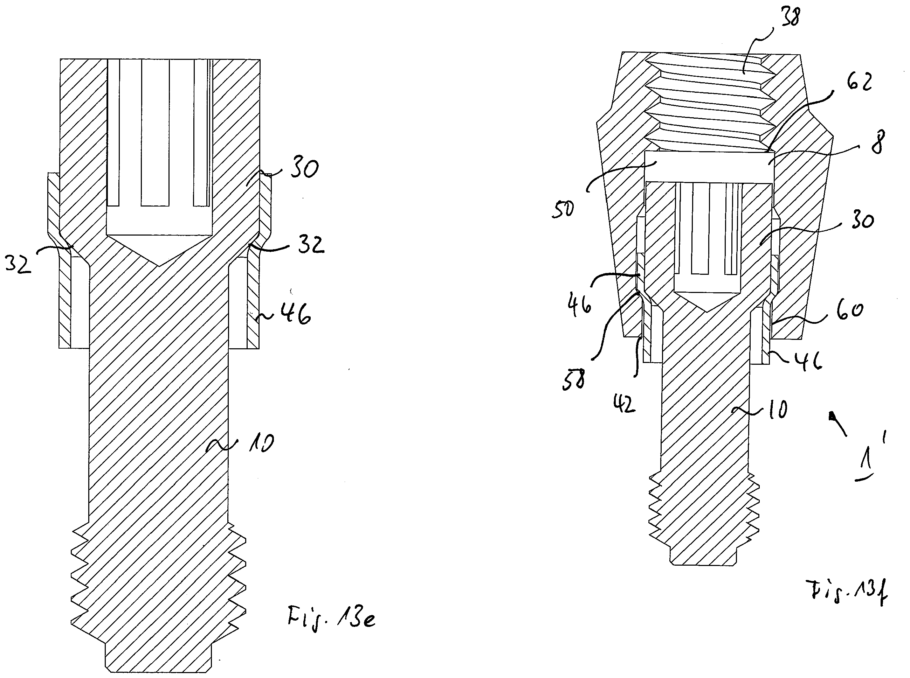

Das als eigenständig erfinderisch angesehene Verfahren zur Herstellung bzw. Endmontage des Abutments 1' als verwendungsfähiges Bauteil, das sodann in den Patientenmund eingesetzt werden könnte, wird anhand der Sequenz der Schnittdarstellungen in den Figs. 13a - 13e näher erläutert. In der Darstellung nach FIG. 13 ist das Abutment 1' in geradliniger Ausgestaltung ausgeführt. Hinsichtlich des Herstellungsverfahrens ist in Fig. 13a der erste Schritt der Endmontage gezeigt, bei dem zunächst die Verbindungsschraube 10 mit ihrem Schraubenkopf 30 voraus in den Schraubenkanal 8 eingebracht ist. Der Schraubenkopf 30 ist dabei bis zum Endanschlag in den Schraubenkanal 8 eingebracht, wobei der Endanschlag 62 durch die Verjüngung des freien Querschnitts beim Übergang des Schraubenkanals 8 in den Zugangskanal 38 gegeben ist. Der zur Bildung des Haltelements 44 vorgesehene Stützring 46, im Ausführungsbeispiel gebildet aus einem Material auf Titanbasis, ist in dieser Phase noch nicht eingebracht.

Im zweiten Schritt, dargestellt in FIG. 13b, wird der Stützring 46 über das freie Ende 14, das Außengewinde 12 und über den Schaft 34 der Verbindungsschraube 10 geführt und in den Schraubenkanal 8 eingebracht. Dazu weist der Stützring 46 einen ausreichend groß bemessenen freien Innenquerschnitt auf. Alternativ kann der Stützring 46 auch geschlitzt oder mehrteilig ausgeführt sein, so dass er über den Schaft 34 der Verbindungsschraube 10 und ggf. die davor liegenden Teile, insbesondere das Außengewinde 12, geschoben werden kann. Im Schraubenkanal 8 wird der Stützring 46 bis zum Anschlag eingeschoben, der durch den vom Übergangsbereich 32 gebildeten Schraubenkopfsitz gebildet wird (vgl. FIG. 13c). Zu diesem Zweck ist der Außendurchmesser des Schraubenkopfes 30 ausreichend groß gewählt, so dass der Stützring 46 nicht über diesen geschoben werden kann.

Anschließend wird der Stützring in den Schraubenkanal 8 hinein und gegen den Schraubenkopf 30 verpresst, wobei er sich plastisch verformt, sich dabei aufweitet und die in FIG. 13d gezeigte Form annimmt. Der Schraubenkopf 30 wird somit in diesem Schritt als Stanz- oder Presswerkzeug für die Umformung des Stützrings 46 verwendet. In dieser Hinsicht kann der als Verformungskante vorgesehene Übergangsbereich 32 geeignet ausgestaltet sein, beispielsweise im Hinblick auf seine Geometrieparameter wie beispielsweise Neigungs- oder Konuswinkel oder eine geeignete Rundung in seinem Flankenprofil. Durch diese Verformung entsteht das in FIG. 13e in ausschnittsweiser Vergrößerung gezeigte Gefüge, bei dem der obere, plastische verformte Bereich des Stützrings 46 den Schraubenkopf 30 umfasst. Dadurch geht der plastisch verformte Stützring 46 eine zuverlässige mechanische Bindung mit dem umfassten Schraubenkopf 30 ein.

Im letzten Schritt, wie in FIG. 13f gezeigt, wird die Verbindungsschraube 10 im Schraubenkanal 8 zu dessen endseitiger Öffnung 42 am apikalen Ende 16 hin verschoben, bis der verformte Teil des Stützrings 46 auf die Stützkante 58 trifft und dort möglicherweise noch weiter verformt wird. Durch die Stützkante 58 wird somit eine zuverlässige Auflagefläche für den Schraubenkopf 30 gebildet. Danei wird der als Halteelement 44 vorgesehene Stützring 46 seinerseits ebenfalls geeignet am Schraubenkanal 8 und somit am Grundkörper 2 des Abutments 1' abgestützt.

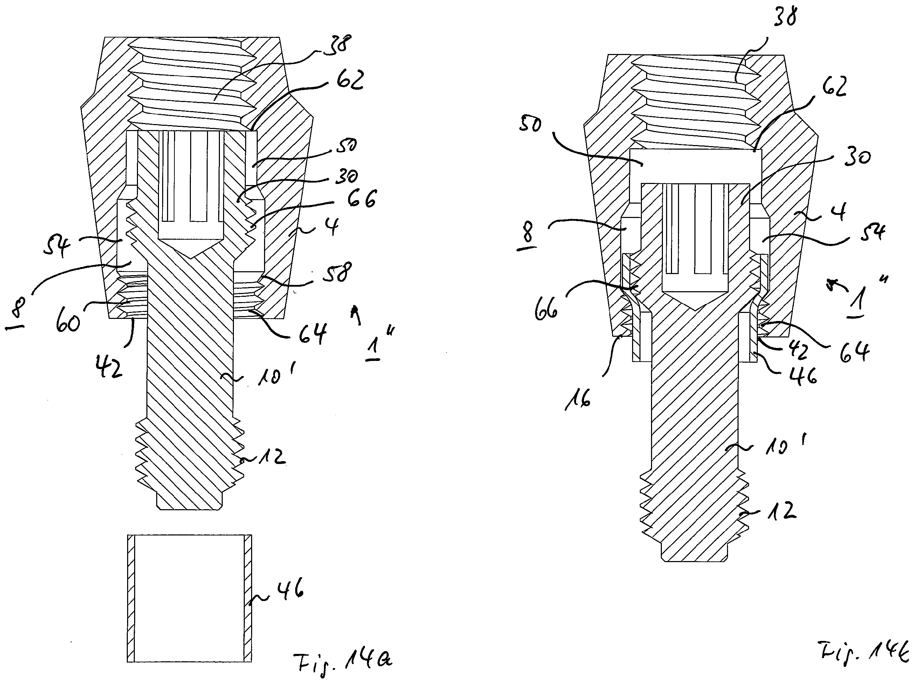

In einer alternativen, ebenfalls als eigenständig erfinderisch angesehenen Ausführung des Abutments 1", wie sie in FIG. 14 dargestellt ist, ist im Segement 60 des Schraubenkanals 8 eine besonders hohe stabilitätsfördernde Materialstärke und auch Auflagefläche vorgesehen. Dazu ist das Segment 60 mit einem Innengewinde 64 versehen, das mit einem am Schraubenkopf 30 der Verbindungsschraube 10' angebrachten Außengewinde 66 korrespondiert. Die Gewindepaarung aus Innengewinde 64 und Außengewinde 66 ist dabei bevorzugt als Linksgewinde ausgelegt. Für die Endmontage des Abutments 1", deren zwei wesentliche Schritte in FIG. 14a und 14b dargestellt sind, wird zunächst die Verbindungsschraube 10' über das am Schraubenkopf 30 angeordnete Außengewinde 66 in das korrespondierende Innengewinde 64 eingeschraubt, bis das Außengewinde 66 das Innengewinde 62 passiert hat und der Schraubenkopf 30 sich im Inneren des Schraubenkanals 8 befindet und bis an den Endanschlag 62 vorgeschoben werden kann. In diesem Sinne ist diese gewindebasierte Ausgestaltung als gleichwirkend zu dem Kriterium zu verstehen, dass der freie Innendurchmesser des Schraubenkanals 8 über dessen gesamte Länge bis hin zur seiner endseitigen Öffnung 42 mindestens so groß gewählt ist wie der Durchmesser des Schraubenkopfes 30 der Verbindungsschraube 10, da nunmehr über die Einschraubbewegung und über den Gewindeeingriff die erwünschte Passierbarkeit der Verbindungsschraube 10' in den Schraubenkanal 8 gegeben ist. Der eingeschobene Zustand ist in FIG. 14a dargestellt. Anschließend wird analog zur vorstehend beschriebenen Variante der Stützring 46 in den Schraubenkanal 8 eingeschoben und - unter anderem mittels des Schraubenkopfes 30 - plastisch verformt. Sodann wird die Verbindungsschraube 10' im Schraubenkanal 8 zu dessen endseitiger Öffnung 42 am apikalen Ende 16 hin verschoben; dieser Zustand ist in FIG. 14b gezeigt.

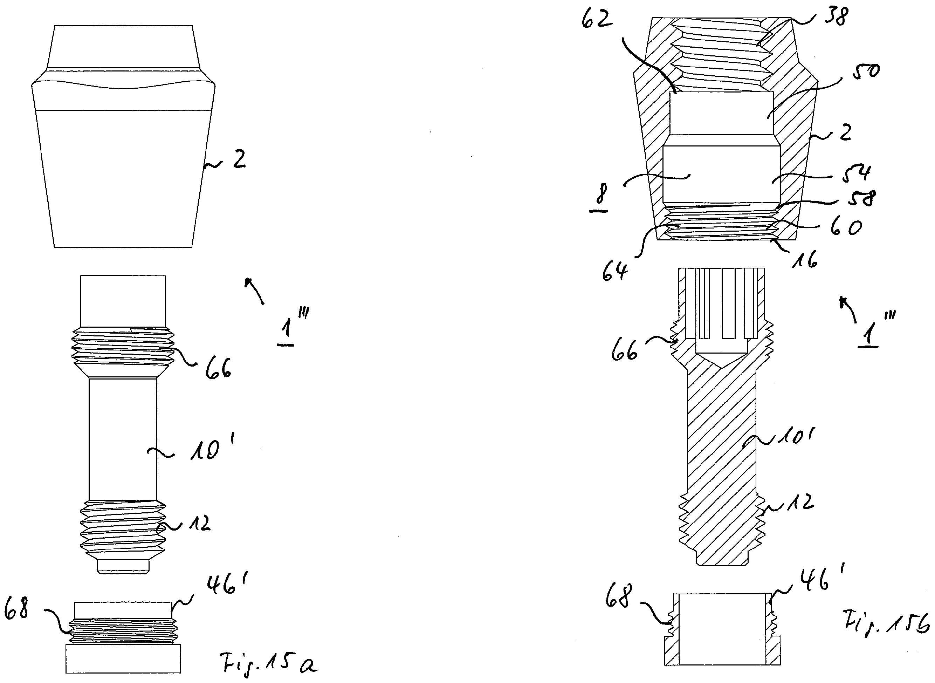

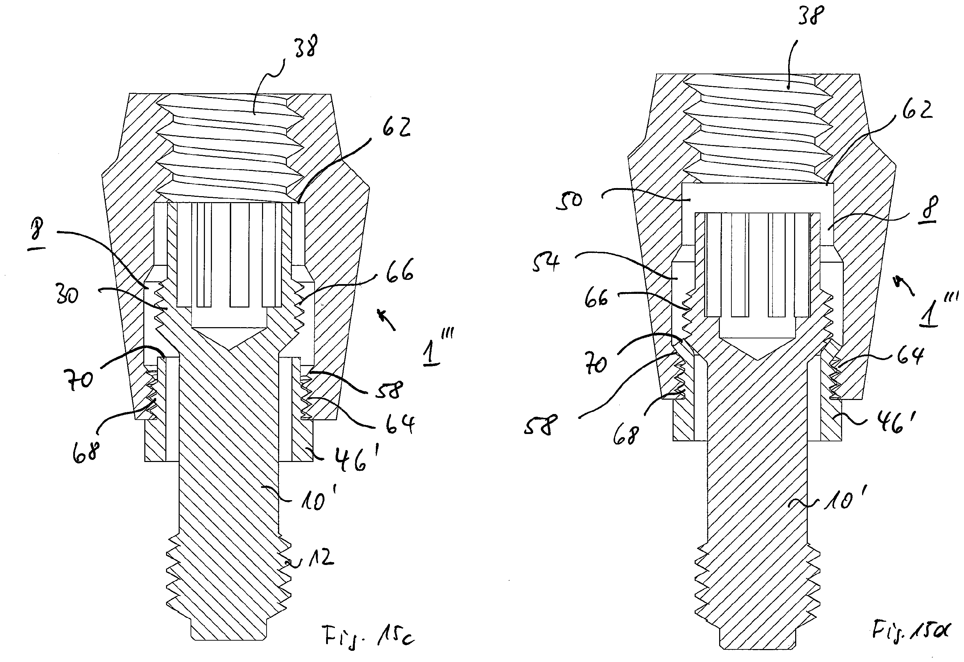

In einer zusätzlichen bevorzugten Weiterbildung, wie sie in FIG. 15 gezeigt ist, ist auch der Stützring 46' mit einem Außengewinde 68 versehen, das ebenfalls mit dem Innengewinde 62 korrespondiert, d. h. mit diesem in Eingriff gebracht werden kann. Ein solchermaßen modifiziertes, ebenfalls als eigenständig erfinderisch angesehenes Abutment 1''' ist in Explosionsdarstellung in FIG. 15a in seitlicher Ansicht und in FIG. 15b im Längsschnitt gezeigt. Bei der Endmontage dieses Abutments 1''' wird ebenfalls zunächst die Verbindungsschraube 10' über das am Schraubenkopf 30 angeordnete Außengewinde 66 in das korrespondierende Innengewinde 64 eingeschraubt, bis das Außengewinde 66 das Innengewinde 62 passiert hat und der Schraubenkopf 30 sich im Inneren des Schraubenkanals 8 befindet und bis an den Endanschlag 62 vorgeschoben werden kann. Anschließend wird der Stützring 46' mit seinem Außengewinde 68 in das Innengewinde 64 eingeschraubt. Dieser Zustand ist im Längsschnitt in FIG. 15c gezeigt. Der Stützring 46' ist dabei derart dimensionert, dass sein Rand 70 nach vollständigem Einschrauben im Inneren des Schraubenkanals 8 innenseitig von der Stützkante 58 positioniert ist.

Im letzten Schritt, wie in FIG. 15d gezeigt, wird auch hier die Verbindungsschraube 10' im Schraubenkanal 8 zu dessen endseitiger Öffnung 42 am apikalen Ende 16 hin verschoben, bis der Übergangsbereich 32 zwischen Schraubenschaft 34 und Schraubenkopf 30 auf den Rand 70 trifft. Beim weiteren Verschieben der Verbindungsschraube 10' in Richtung zum apikalen Ende 16 hin wird der Stützring 46' von seinem Rand 70 her zunehmedn verformt, bis er sich an die Verformungskante 58 anlegt. Dadurch geht der plastisch verformte Stützring 46' einerseits eine zuverlässige mechanische Bindung mit dem umgebenden Schraubenkanal 8 ein, wobei andererseits eine zuverlässige Auflagefläche für den Schraubenkopf 30 gebildet wird. Somit wird der als Halteelement 44 vorgesehene Stützring 46' seinerseits ebenfalls geeignet am Schraubenkanal 8 und somit am Grundkörper 2 des Abutments 1''' abgestützt. Der über das Außengewinde 68 eingeschraubte Stützring 46' bietet zudem noch den Vorteil, dass er ein unerwünschtes Eingreifen des am Schraubenkopf 30 angeordneten Außengewindes 66 in das Innengewinde 64 beim Anziehen der Verbindungsschraube 30 hemmt und unterbindet.

Selbstverständlich sind sämtliche der vorgenannten Komponenten geeignet dimensionert und in Relation zueinander geeignt in ihren Größen und sonstigen Maßen aufeinander abgestimmt, so dass die beschriebenen Bearbeitungsvorgänge möglich sind.

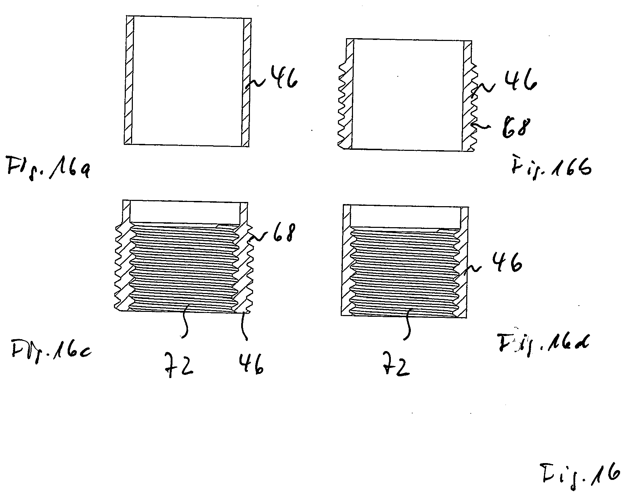

Für den Stützring 46 können grundsätzlich und in Abhängigkeit von der Auslegung der weiteren Komponenten verschiedenartige Gewindekonfigurationen vorgesehen sein, wie in FIG. 16 im Längsschnitt gezeigt. Denkbar ist ein Stützring 46 ohne Gewinde (FIG. 16a), nur mit bevorzugt an das Innengewinde 64 angepasstem und somit zum Außengewinde 66 am Schraubenkopf 30 identischem Außengewinde 68 (FIG. 16b), mit derartigem Außengewinde 68 und zusätzlichem, bevorzugt an das Außengewinde 12 der Verbindungsschraube 10, 10' angepasstem Innengewinde 72 (FIG. 16c) oder nur mit diesem Innengewinde 72 (FIG. 16d).

### Bezugszeichenliste

- 1: Abutment
- 2: Grundkörper
- 4: Verbindungszapfen
- 6: Montagezapfen
- 8: Schraubenkanal
- 10, 10': Verbindungsschraube
- 12: Außengewinde
- 14: freies Ende
- 16: apikales Ende
- 18, 20: Längsachse
- 22: Innengewinde
- 24: Bohrung
- 26: okklusales Ende
- 28: Schraubenauflage
- 30: Schraubenkopf
- 32: Übergangsbereich
- 34: Schraubenschaft
- 36: Ausnehmung
- 38: Zugangskanal
- 40: Überlappungsbereich
- 42: endseitige Öffnung
- 44: Halteelement
- 46: Stützring
- 50: Segment
- 52: Übergangsbereich
- 54: Segment
- 56: Übergangsbereich
- 58: Stützkante
- 60: Segment
- 62: Endanschlag
- 64: Innengewinde
- 66,68: Außengewinde
- 70: Rand
- 72: Innengewinde

## Patentansprüche

1. Abutment (1', 1", 1'''), insbesondere zur Verwendung mit einem in den Kieferknochen eines Patienten inserierten Dentalimplantat, mit einem in einen zugeordneten Aufnahmekanal des Dentalimplantats einbringbaren Verbindungszapfen (4), in den ein Schraubenkanal (8) mit einer in diesen eingelegten, zur Verbindung des Abutments (1', 1", 1''') mit dem Dentalimplantat vorgesehenen Verbindungsschraube (10, 10') integriert ist, wobei der Innendurchmesser des Schraubenkanals (8) über dessen gesamte Länge bis hin zur endseitigen Öffnung (34) mindestens so groß gewählt ist wie der Durchmesser des Schraubenkopfes (30) der Verbindungsschraube (10, 10'), **dadurch gekennzeichnet, dass** eine Abstützung der Verbindungsschraube (10, 10') über ein nachträglich zur Verbindungsschraube (10, 10') in den Schraubenkanal (8) eingebrachtes, und anschließend plastisch verformtes Halteelement (44) erfolgt.

2. Abutment (1', 1", 1''') nach Anspruch 1, bei dem als Halteelement (44) ein in den Schraubenkanal (8) eingepresster Stützring (46) vorgesehen ist.

3. Abutment (1', 1", 1''') nach Anspruch 1 oder 2, bei dem das Halteelement (44) in den Schraubenkanal (8) eingeschraubt ist.

4. Abutment (1', 1", 1''') nach Anspruch 1 oder 2, bei dem als Halteelement (44) ein mit einer umlaufenden, in eine zugeordnete, im Schraubenkanal (8) umlaufende Nut eingreifenden Wulst versehener Stützring vorgesehen ist.

5. Abutment (1', 1", 1''') nach einem der Ansprüche 1 bis 4, das einen zur Anbringung eines Prothetikelements vorgesehenen Montagezapfen (6) umfasst, dessen Längsachse (18) um einen Verkippungswinkel von 15° - 30° gegenüber der Längsachse (20) des Schraubenkanals (8) verkippt angeordnet ist.

6. Verfahren zur Herstellung eines Abutments (1', 1", 1''') nach einem der Ansprüche 1 bis 5, bei dem in den Schraubenkanal (8) eines Abutment-Grundkörpers (2) von dessen für den Kontakt mit dem Dentalimplantat vorgesehener Stirnseite aus die Verbindungsschraube (10) mit ihrem Schraubenkopf (30) voraus eingelegt wird, wobei anschließend in den Schraubenkanal (8) ein zur Abstützung des Schraubenkopfes (30) vorgesehenes Halteelement (44) eingebracht und im Schraubenkanal (8) fixiert wird, wobei das Halteelement (44) nach seiner Einbringung in den Schraubenkanal (8) plastisch verformt wird.

## Claims

1. Abutment (1',1 ", 1'''), in particular for use with a dental implant inserted into the jaw bone of a patient, comprising a connection pin (4), which can be introduced into an associated receiving channel of the dental implant and in which there is integrated a screw channel (8) with a connection screw (10, 10') provided therein for connection of the abutment (1', 1", 1''') to a dental implant, wherein the inner diameter of the screw channel (8) is selected, over its entire length as far as the end-side opening (34), to be at least as large as the diameter of the screw head (30) of the connection screw (10, 10'), **characterised in that** the connection screw (10, 10') is supported via a retaining element (44) that is introduced into the screw channel (8) subsequently to the connection screw (10, 10') and is then plastically deformed.

2. Abutment (1', 1", 1''') according to claim 1, in which a support ring (46) pressed into the screw channel (8) is provided as retaining element (44).

3. Abutment (1', 1", 1''') according to claim 1 or 2, in which the retaining element (44) is screwed into the screw channel (8).

4. Abutment (1', 1", 1''') according to claim 1 or 2, in which a support ring provided with a peripheral bead engaging in an associated groove formed peripherally in the screw channel (8) is provided as retaining element (44).

5. Abutment (1', 1", 1''') according to one of claims 1 to 4, which comprises a mounting pin (6) intended for the attachment of a prosthetic element, the longitudinal axis (18) of the mounting pin being arranged tilted by a tilt angle of 15° - 30° relative to the longitudinal axis (20) of the screw channel (8).

6. Method for producing an abutment (1', 1", 1''') according to one of claims 1 to 5, in which the connection screw (10) is inserted with its screw head (30) to the fore into the screw channel (8) of an abutment main body (2) from the end face thereof intended for contact with the dental implant, wherein a retaining element (44) intended to support the screw head (30) is then introduced into the screw channel (8) and is fixed in the screw channel (8), wherein the retaining element (44) is plastically deformed after having been introduced into the screw channel (8).

## Revendications

1. Pilier (1', 1", 1'''), destiné en particulier à être utilisé avec un implant dentaire inséré dans l'os maxillaire d'un patient, comprenant une broche de liaison (4) pouvant être intégrée dans un canal de logement correspondant de l'implant dentaire dans laquelle est intégré un canal de vis (8) avec une vis de liaison (10, 10') insérée dans celui-ci, prévue pour la liaison du pilier (1', 1", 1''') avec l'implant dentaire, dans lequel le diamètre intérieur du canal de vis (8) est sélectionné sur toute sa longueur jusqu'à l'ouverture (34) d'extrémité au moins aussi grand que le diamètre de la tête de vis (30) de la vis de liaison (10, 10'), **caractérisé en ce qu'**un appui de la vis de liaison (10, 10') a lieu par un élément de retenue (44) intégré ultérieurement à la vis de liaison (10, 10') dans le canal de vis (8) et enfin déformé plastiquement.

2. Pilier (1', 1", 1''') selon la revendication 1, dans lequel une bague d'appui (46) comprimée dans le canal de vis (8) est prévue en tant qu'élément de retenue (44).

3. Pilier (1', 1", 1''') selon la revendication 1 ou 2, dans lequel l'élément de retenue (44) est vissé dans le canal de vis (8).

4. Pilier (1', 1", 1''') selon la revendication 1 ou 2, dans lequel une bague d'appui dotée d'un boudin périphérique se mettant en prise dans une rainure périphérique dans le canal de vis (8) est prévue en tant qu'élément de retenue (44).

5. Pilier (1', 1", 1''') selon l'une des revendications 1 à 4, qui comprend une broche de montage (6) prévue pour poser un élément de prothèse, dont l'axe longitudinal (18) est disposé basculé dans un angle de bascule de 15° - 30° par rapport à l'axe longitudinal (20) du canal de vis (8).

6. Procédé de fabrication d'un pilier (1', 1", 1''') selon l'une des revendications 1 bis 5, dans lequel, dans le canal de vis (8), un corps de base de pilier (2) à partir de la face avant duquel prévue pour le contact avec l'implant dentaire, la vis de liaison (10) est intégrée d'abord par sa tête de vis (30), dans lequel ensuite, un élément de retenue (44) prévu pour l'appui de la tête de vis (30) est inséré et fixé dans le canal de vis (8), dans lequel l'élément de retenue (44) est déformé plastiquement après son intégration dans le canal de vis (8).
